**Europäisches Patentamt**

**European Patent Office**

**Office européen des brevets**

(19)

(11) Veröffentlichungsnummer : **0 379 492 B1**

(12)  # EUROPÄISCHE PATENTSCHRIFT

(45) Veröffentlichungstag der Patentschrift :
**30.10.91 Patentblatt 91/44**

(51) Int. Cl.$^5$ : **G01B 7/30, G01D 5/242, G01L 3/10**

(21) Anmeldenummer : **88907090.0**

(22) Anmeldetag : **28.07.88**

(86) Internationale Anmeldenummer :
**PCT/DE88/00468**

(87) Internationale Veröffentlichungsnummer :
**WO 89/02058 09.03.89 Gazette 89/06**

(54) **MESSEINRICHTUNG FÜR EINEN DREHWINKEL UND/ODER EIN DREHMOMENT.**

(30) Priorität : **02.09.87 DE 3729230**

(43) Veröffentlichungstag der Anmeldung :
**01.08.90 Patentblatt 90/31**

(45) Bekanntmachung des Hinweises auf die
Patenterteilung :
**30.10.91 Patentblatt 91/44**

(84) Benannte Vertragsstaaten :
**DE FR GB IT**

(56) Entgegenhaltungen :
**DE-A- 3 307 105**

(56) Entgegenhaltungen :
**DE-A- 3 511 490
DE-C- 2 951 148
US-A- 2 867 118
US-A- 3 858 443
Lueger Lexikon der Technik, Bd 2, 1960, S 351**

(73) Patentinhaber : **ROBERT BOSCH GmbH
Postfach 10 60 50
W-7000 Stuttgart 10 (DE)**

(72) Erfinder : **DOBLER, Klaus
Bettäckerstr. 12
W-7016 Gerlingen (DE)**
Erfinder : **HACHTEL, Hansjörg
Buchenstr. 4
W-7251 Weissach (DE)**

## Beschreibung

### Stand der Technik

Die Erfindung geht aus von einer Meßeinrichtung nach der Gattung des Hauptanspruchs. Bei einer derartigen aus der DE-A-3 307 105 bekannten Meßeinrichtung kann mit Hilfe von zwei zueinander und zur Wellenachse konzentrischen, zylindrischen Hülsen, die gegeneinander drehbar und an ihrer Umfangsfläche in eine gleiche Anzahl mehrerer zur Wellenachse paralleler, segmentartiger Mantelflächen unterteilt sind, das Drehmoment an der Welle gemessen werden. Die Mantelflächen weisen dabei in Umfangsrichtung abwechselnd hohe und niedrige elektrische Leitfähigkeit auf und sind von mindestens einer zu den Hülsen gleichachsigen Wicklung umschlungen.

Ferner wird in der US-A 2 867 118 eine bifilare Spulenwicklung zur Erhöhung der Empfindlichkeit gelehrt. Dabei sind die beiden Spulen jeweils aufeinander gewickelt. Bei einem Windungsschlaf zwischen zwei Windungen würden hier nur diese beiden Windungen ausfallen und sich kein als Fehler meßbarer Effekt ergeben. Da Spulen gewöhnlich eine große Anzahl von Windungen haben, würde durch den Windungsschluß zwischen zwei Spulen im Extremfall sogar ein Meßsignal vorgetäuscht werden, das im normalen Meßbereich der Meßeinrichtung liegen würde. Dieser Windungsschluß würde nicht als Fehler, sondern als Meßsignal erkannt und gegebenenfalls zu einer Fehlsteuerung führen.

Ferner wird in der Schrift "Lueger, Lexikon der Technik, Band 2, 1960, Seite 351" eine bifilare Wicklung eines Drahtes dadurch erreicht, daß er in der Mitte gefaltet wird und somit die beiden Drahtschleifen nebeneinander liegen. Hierbei handelt es sich aber nicht um zwei verschiedene Drähte, die aneinander liegen. Vielmehr ist bei der dargestellten bifilaren Wicklung die Stromrichtung der aneinanderliegenden Drahtschleifen gegensinnig. Dies bedeutet, daß die erzeugten Magnetfelder entgegengesetztes Vorzeichen haben und sich die Magnetfelder gegenseitig in ihrer Wirkung aufheben. Beim Anmeldegegenstand ist hingegen die Magnetfelderzeugung zur Erfassung des Drehwinkels unbedingt notwendig, da diese Magnetfelder auf dem Mantelflächen Wirbelströme erzeugen.

### Vorteile der Erfindung

Die erfindungsgemäße Meßeinrichtung mit den kennzeichnenden Merkmalen des Hauptanspruchs hat demgegenüber den Vorteil, daß die Meßsicherheit und somit auch die Ausfallsicherheit für das Gerät, bei dem die Meßeinrichtung eingebaut ist, verbessert wird. Bereits bei einer kleinen Anzahl von kurzgeschlossenen Windungen kann dieser Fehler von einer Überwachungselektronik sofort und zweifelsfrei als Meßfehler erkannt werden. Bei einem sogenannten Windungsschlaf wird eine der Spulen der Wheatstone' schen Brückenschaltung kurzgeschlossen, so daß die Brückenschaltung weit über die Meßbereichsgrenzen hinaus verstimmt wird, was deutlich als fehlerhaftes Meßsignal erkennbar ist. Trotz der erhöhten Spulenanzahl ist eine relativ kurze Baulänge möglich.

Durch die in den Unteransprüchen aufgeführten Maßnahmen sind vorteilhafte Weiterbildungen und Verbesserungen der im Hauptanspruch angegebenen Merkmale möglich.

### Zeichnung

Ausführungsbeispiele der Erfindung sind in der Zeichnung dargestellt und in der nachfolgenden Beschreibung näher erläutert. Es zeigen die Figur 1 eine Meßeinrichtung in einem axialen Längsschnitt, Figur 2 die innere Hülse, Figur 3 die äußere Hülse, Figur 4 eine schaltungsmäßige Darstellung der Spulen, Figur 5, 6 je eine Abwandlung des obigen Ausführungsbeispiels und Figuren 7 bis 9 eine Ausbildung in Scheibenform.

### Beschreibung der Ausführungsbeispiele

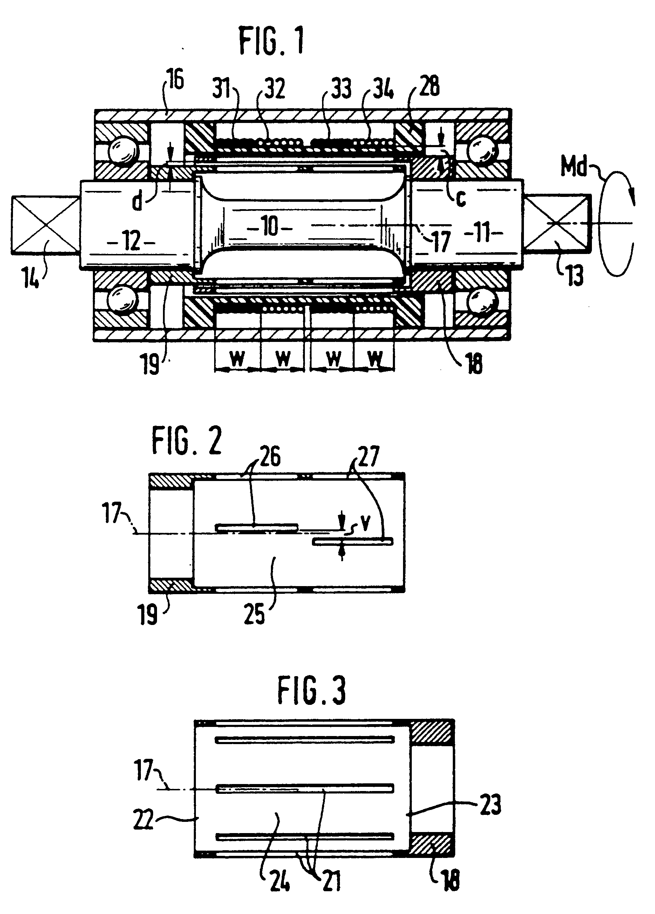

In Figur 1 ist mit 10 ein Torsionsstab zur Erfassung des Drehwinkels bzw. Drehmoments bezeichnet, der zwischen zwei Wellenstümpfen 11 und 12 einem Drehmoment ausgesetzt ist. Der rechte Wellenstumpf 11 verdreht sich gegenüber dem linken Wellenstumpf 12 um einen kleinen Drehwinkel. Die Wellenstümpfe 11, 12 sind Teil einer Welle, z.B. einer Lenkhilfe für Kraftfahrzeuge. In Figur 1 ist angenommen, daß ein rechtsdrehendes Drehmoment Md über einen Vierkant 13 in den rechten Wellenstumpf 11 eingeleitet wird und daß an dem Vierkant 14, der mit dem linken Wellenstumpf 12 verbunden ist, ein nicht dargestelltes Gegendrehmoment wirksam wird.

Zur Erfassung des Drehmoments Md weist die erfindungsgemäße Meßeinrichtung in einem rohrförmigen Gehäuse 16 zwei zur gemeinsamen Längsachse 17 konzentrische Hülsen, nämlich eine äußere Hülse 18 und eine innere Hülse 19 auf, jeweils, aus etwa ein Millimeter starkem, elektrisch leitfähigem, vorzugsweise nichtmagnetischem Material. Die äußere Hülse 18 ist auf dem rechten Wellenstumpf 11 drehfest angeordnet, während die innere Hülse 19 auf dem linken Wellenstumpf 12 in gleicher Weise befestigt ist.

Die äußere Hülse 18 weist über ihren Umfang mehrere beispielsweise acht, gleichmäßig verteilte, zur Längsachse 17 parallele Längsschlitze 21 auf, welche in die Hülsenwand eingefräst, eingesägt oder eingestanzt sind und bis nahe an die beiden stirnseitigen Randzonen 22, 23 heranreichen. Dadurch entstehen Mantelflächen 24 zwischen jeweils zwei Längsschlitzen 21 mit einer elektrischen Leitfähigkeit, die derjenigen des Hülsenwerkstoffs entspricht, während die sich mit diesen Mantelfächen 24 in Umfangsrichtung abwechselnden Längsschlitze 21 Zonen bilden, die keine elektrische Leitfähigkeit aufweisen.

Die Umfangsfläche der inneren Hülse 19 ist in analoger Weise in untereinander zusammenhängende Zonen 25 unterteilt, die sich mit den Mantelflächen 24 der äußeren Hülse 18 in radialer Richtung decken. Bei der inneren Hülse 19 sind zwei Schlitzreihen ausgebildet, die parallel zur Achse 17 sich erstreckende Schlitze 26 und 27 aufweisen. Die zu einem Schlitzpaar gehörenden beiden Schlitze 26 und 27 sind gegeneinander in Umfangsrichtung der Hülse 19 um einen Abstand v versetzt, welcher etwa der Schlitzbreite entspricht und z.B. ungefähr ein Millimeter beträgt. Jeder der beiden Schlitze 26 und 27 hat nur eine etwa halb so große axiale Länge wie der zugeordnete Schlitz 21 in der äußeren Hülse 18.

In dem Deckungsbereich der inneren und der äußeren Hülse 18 ist ein aus Isolierstoff hergestellter, zylindrischer Spulenkörper 28 vorgesehen, welcher im Bereich des Schlitzes 26 zwei Spulen 31, 32 und im Bereich des Schlitzes 27 ebenfalls zwei Spulen 33, 34 aufweist. Die Spulen 31 bis 34 sind einlagig auf den Spulenkörper 28 aufgewickelt. Um eine möglichst kurze Baulänge zu erhalten, stoßen auf die Spulen 31, 32 bzw. 33 und 34 aneinander. Ferner wird dadurch eine magnetische Kopplung zwischen den Spulen 31, 32 bzw. 33 und 34 erreicht. Die in axialer Richtung gemessene maximale Breite w der Wicklungen der Spulen 31, 32 bzw. 33, 34 soll die Länge der Schlitze 26 bzw. 27 nicht überschreiten. Besonders vorteilhaft erweist es sich, wenn die Spulen 31, 32 bzw. 33, 34 die Schlitze 26, 27 in einem Wickelbereich überdecken, und die Bandbereiche der Schlitze, insbesondere wegen der dort eventuell auftretenden Störsignale, nicht berührt werden.

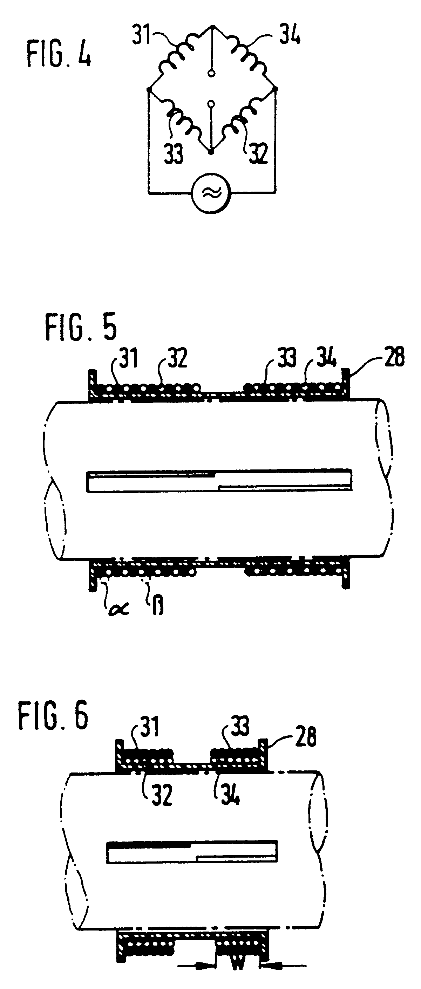

Bei Verwendung der vier Spulen 31 bis 34 ist eine Differenzmeßmethode in einer in Figur 4 dargestellten Wheatstone' schen Brückenschaltung möglich. Die jeweils einen Schlitz 26 bzw. 27 der inneren Hülse 19 überdeckenden Spulen 31, 32 bzw. 33, 34 sind dabei in den jeweils gegenüberliegenden Zweig der Wheatstone' schen Brücken verschaltet. In nahezu linearer Abhängigkeit zu der Größe des angelegten Drehmoments Md werden die beiden Hülsen 18 und 19 radial gegeneinander so verdreht, daß eine der beiden versetzten Schlitze 26 oder 27 aus der Überdeckung mit dem Schlitz 21 der äußeren Hülse 18 herauswandert, während der andere dieser verkürzten Schlitze mit zunehmender Überdeckung unter den zugehörigen äußeren Schlitz wandert. Dabei wird in den einen Spulen 31, 32 eine Verkleinerung und in den anderen Spulen 33, 34 eine Vergrößerung ihrer Induktivität bzw. umgekehrt dadurch erreicht, daß die in der inneren Hülse 19 erzeugten Wirbelströme sich vergrößern bzw. verkleinern, wenn die Wicklungen von einem hochfrequenten Wechselstrom durchflossen werden.

Für eine hohe Empfindlichkeit der Meßeinrichtung ist es besonders wichtig, daß der radiale Abstand c zwischen den Spulen 31 bis 34 und dem Außenumfang der äußeren Hülse 18 und der radiale Abstand d zwischen der inneren (19) und der äußeren Hülse 18 möglichst kleingehalten wird und daß mit Hilfe von mindestens vier Spulen 31 bis 34 eine Temperaturdrift- und eine Meßfehlerkompensation weitgehend möglich ist.

Bei der Ausbildung nach Figur 5 wird besonders vorteilhaft eine Erhöhung der Meßsicherheit, insbesondere dann, wenn die Meßeinheit im Kraftfahrzeug als sogenannte Lenkhilfe eingebaut ist, erreicht. Hierzu sind die einem Schlitz zugeordneten Spulen 31, 32 bzw. 33, 34 jeweils so parallel nebeneinander gewickelt, daß immer eine Windung der Spule 31 einer Windung der Spule 32 benachbart ist und aneinanderliegen. Entsprechendes gilt für die Spulen 33, 34. Die beiden Spulen 31, 32 bzw. 33, 34 sind somit so ineinander gewickelt, daß sich die magnetischen Wechselfelder der Wicklungen der Spulen 31, 32 bzw. 33, 34 addieren. Die so erreichte magnetische Kopplung zwischen den Spulen 31, 32 bzw. 33, 34 begründet, infolge der gegenseitigen Verstärkung des Meßeffektes durch die ineinander gewickelten Spulen, eine kurze axiale Baulänge der Meßeinrichtung. Durch die Verstärkung des Meßeffektes kann auf eine lange Baulänge verzichtet werden. Bei einem Windungsschlaf, z. B. im Bereich $\alpha$, d. h. zwischen den Windungen der Spulen 31, 32 bzw. auch 33, 34 wird nahezu eine der Spulen der Wheatstone' schen Brücke kurzgeschlossen, so daß das an der Brücke abgegriffene Spannungssignal deutlich verstimmt ist und sich deutlich von der eigentlichen Meßspannung unterscheidet. Eine nachgeschaltete Überwachungselektronik erkennt dadurch sofort das fehlerhafte Spannungssignal. Der Ort des Windungsschlusses zwischen den beiden Spulen kann dabei beliebig sein, da jeweils entsprechend große Bereiche der Spulen überbrückt werden.

Befindet sich beispielsweise der Windungsschluß in Bereich $\beta$, etwa in der Mitte des Schlitzes 26, so werden jeweils etwa die Hälfte der Spule 31 bzw. die Hälfte der Spule 32 kurzgeschlossen. Aufgrund der Wheatstone' schen Brückenschaltung ergibt sich ebenfalls wieder ein deutliches fehlerhaftes Spannungssignal.

In Figur 6 sind die einlagigen Spulen 31, 32 bzw. 33, 34 übereinanderliegend angeordnet. Dadurch ist eine besonders kurze axiale Baulänge möglich. Eine Überwachungsicherheit ist aber nur bedingt möglich.

Die Anordnung der Spulen der Meßeinrichtung ist nicht nur auf eine Ausbildung mit Hülse 18, 19 beschränkt. Sie kann auch auf ein Ausführungsbeispiel mit zwei Scheiben angewendet werden, wobei die Scheiben in ihrer Wirkung der Hülsen entsprechen.

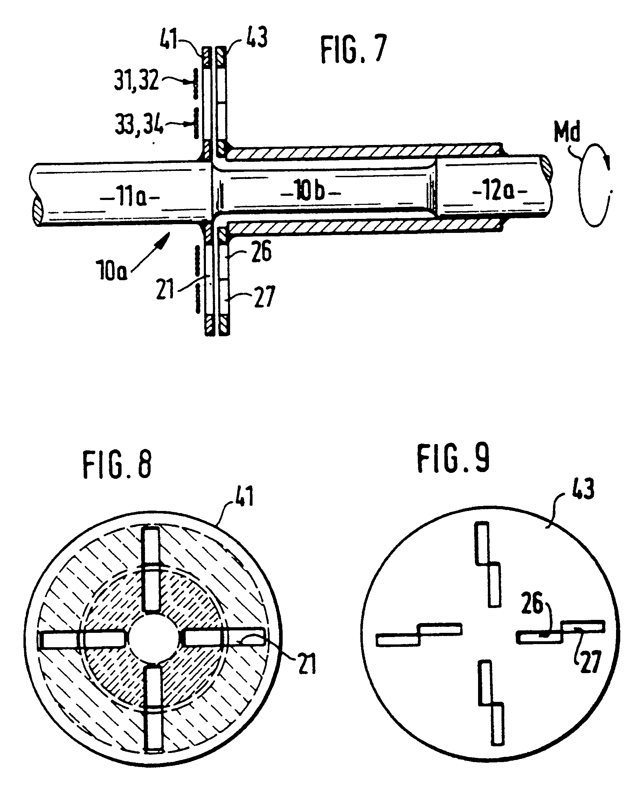

Hierzu ist nach Figur 7 auf der Welle 10a eine erste Scheibe 41 relativ zur Welle 10a unverdrehbar angeordnet, die mehrere radial verlaufende Schlitze 21 aufweist, wie sie aus den obigen Ausführungsbeispielen erkennbar und in Figur 8 näher dargestellt sind. Ferner ist in geringem Abstand zur Scheibe 41 eine zweite Scheibe 43 angeordnet, die ebenfalls mehrere radial verlaufende, zueinander versetzte Schlitze 26, 27 aufweist. Die Scheibe 43 entspricht in ihrer Wirkung der inneren Hülse 19 und ist in Figur näher dargestellt. Die Welle 10a weist wieder einen Torsionsabschnitt 10(b) auf, desen Verdrehung proportional zum übertragenen Moment Md ist. Die Scheibe 41 ist z.B. mitHilfe einer Schweißverbindung auf den Endabschnitt 11a und die weite Scheibe 43 mit Hilfe eines Rohrs 45 auf den anderen Endabschnitt 12a der Welle 10a befestigt. Der freien Stirnseite der ersten Scheibe 41 stehen im Bereich der Schlitze 26, 27 jeweils zwei Spulen 31, 32 bzw. 33, 34 gegenüber, die in Bäume feststehen können. Entsprechend den obigen Ausführungsbeispielen können die Spulen 31, 32, 33, 34 nach Figur 1, 5 oder 6 gewickelt sein. In Figur 7 ist die besonders vorteilhafte Anordnung der nebeneinander parallel gewickelten Spulen, wie in Figur 5 gezeigt, dargestellt. Diese Anordnungen zeichnen sich durch eine weitgehende durch Lagerspiel begründete Offsetdrift-Kompensation aus. Ferner ist es auch möglich auf der Stirnseite der Scheibe 43 weitere Spulen im Bereich der Schlitze 26, 27 anzuordnen. Die Spulen der beiden Stirnseiten sind spiegelbildlich zueinander angeordnet, und jeweils gegenüberliegende Spulen sind in einen Zweig einer Wheatstone' schen Brücke verschaltet. Zusätzlich zur Offsetdrift kann die durch axiale Verschiebung der beiden Scheiben 41, 43 zu den Spulen bewirkte Empfindlichkeitsänderung verkleinert werden.

**Patentansprüche**

1. Meßeinrichtung zur berührungsfreien Erfassung eines Drehwinkels und/oder Drehmoments an einer stehenden oder rotierenden Welle mit zwei zur Achse koaxial angeordneten Körpern (18, 19), die gegeneinander drehbar und an ihren einander zugewandten Flächen in eine gleiche Anzahl mehrerer segmentartiger Mantelflächen (24) unterteilt sind, die abwechselnd hohe und niedrige elektrische Leitfähigkeit aufweisen und denen mindestens eine Wicklung (31 - 34) zugeordnet ist, wobei jeder Meßbereich (2W) mindestens zwei Wicklungen (31 - 34) aufweist und die Wicklungen (31 - 34) eines Meßbereichs (2W) areinanderstoßen, so daß eine induktive Kopplung der Wicklungen (31 - 34) dieses Meßbereichs (2W) bewirkt wird, dadurch gekennzeichnet, daß die Wicklungen (31 - 34) von einem hochfrequenten Wechselstrom durchflossen sind, daß die Wicklungen (31 - 34) eines Meßbereichs (2W) jeweils abwechselnd parallel nebeneinander so gewickelt sind, daß immer eine Windung der ersten Wicklung (31 - 33) einer Windung der zweiten Wicklung (32 bzw. 34) benachbart aneinanderliegend ist, so daß bei Verschaltung der Wicklungen (31 - 34) in einer Vollbrückenschaltung (Wheatstone' sche Brücke) eine Sicherheitsüberwachung der Meßeinrichnet möglich ist.

2. Meßeinrichtung nach Anspruch 1, dadurch gekennzeichnet, daß die Wicklungen (31 - 34) einlagig ausgebildet sind.

3. Meßeinrichtung nach Anspruch 1 und/oder 2, dadurch gekennzeichnet, daß der eine Körper (19) über die eine Längshälfte bzw. radiale Hälfte und über die andere Längshälfte bzw. radiale Hälfte gegeneinander versetzte Schlitze (26, 27) aufweist und daß der andere Körper (18) über nahezu die gesamte Längsseite bzw. radiale Länge verlaufende Schlitze (21) hat.

4. Meßeinrichtung nach einem der Ansprüche 1 bis 3, dadurch gekennzeichnet, daß die Wicklungen (31 - 34) mittig über je einem der gegeneinander versetzten Schlitze (26, 27) angeordnet sind.

5. Meßeinrichtung nach einem der Ansprüche 1 bis 4, dadurch gekennzeichnet, daß die beiden gegeneinander versetzten Schlitze (26, 27) nur eine etwa halb so große axiale Länge haben, wie der zugeordnete Schlitz (21) in dem anderen Körper (18)

6. Meßeinrichtung nach einem der Ansprüche 1 bis 5, dadurch gekennzeichnet, daß von den beiden gegeneinander versetzten Schlitzen (26, 27) der eine im Bereich einer der beiden axialen Längshälften und der andere Schlitz in der anderen Längshälfte ihres Körpers, vorzugsweise des innenliegenden Körpers (19) angeordnet ist.

7. Meßeinrichtung nach einem der Ansprüche 1 bis 6, dadurch gekennzeichnet, daß die Körper zylindrische und zueinander und zur Welle konzentrische Hülsen (18, 19) sind.

8. Meßeinrichtung nach einem der Ansprüche 1 bis 6, dadurch gekennzeichnet, daß die Körper (41, 43) scheibenförmig ausgebildet sind.

9. Meßeinrichtung nach Anspruch 8, dadurch gekennzeichnet, daß auf den Stirnseiten beider scheibenförmiger Körper (41, 43) jeweils spiegelbildlich gegenüberliegend im Bereich der Schlitze Spulen (31 bis 34) angeordnet sind.

**Claims**

1. Measuring device for the non-contacting detection of a rotational angle and/or torque on a stationary or rotating shaft having two bodies (18, 19), arranged coaxially with respect to the axis, which can rotate counter to each other and are split, on their mutually facing surfaces, into an equal number of a plurality of segment-like shell surfaces (24) which exhibit alternating high and low electrical conductivity, and to which at least one winding (31-34) is allocated, each measuring region (2W) exhibiting at least two windings (31 - 34), and the windings (31 - 34) of a measuring region (2W) abutting one another, such that an inductive coupling of the windings (31 - 34) of this measuring region (2W) is effected, characterised in that the windings (31 - 34) are flowed through by a high-frequency alternating current, in that the windings (31 - 34) of a measuring region (2W) are wound in each case alternately parallel to each other such that one turn of the first winding (31 - 33) is always located side-by-side next to one turn of the second winding (32 or 34), such that if the windings (31 - 34) are connected in a full-bridge circuit (Wheatstone bridge), reliability monitoring of the measuring device is possible.

2. Measuring device according to Claim 1, characterised in that the windings (31 - 34) are configured in a single layer.

3. Measuring device according to Claim 1 and/or 2, characterised in that the one body (19) exhibits slots (26, 27) which are offset with respect to each other over the one longitudinal half or radial half and over the other longitudinal half or radial half, and in that the other body (18) has slots (21) running over virtually the whole longitudinal side or radial length.

4. Measuring device according to one of Claims 1 to 3, characterised in that the windings (31 - 34) are arranged centrally over one each of the slots (26, 27) which are offset with respect to each other.

5. Measuring device according to one of Claims 1 to 4, characterised in that the two slots (26, 27) which are offset with respect to each other have an axial length which is only approximately half as large as the associated slot (21) in the other body (18).

6. Measuring device according to one of Claims 1 to 5, characterised in that, of the two slots (26, 27) which are offset with respect to each other, the one slot is arranged in the region of one of the two axial longitudinal halves and the other slot is arranged in the other longitudinal half of its body, preferably of the inner body (19).

7. Measuring device according to one of Claims 1 to 6, characterised in that the bodies are cylindrical sleeves (18, 19) and are concentric to each other and to the shaft.

8. Measuring device according to one of Claims 1 to 6, characterised in that the bodies (41, 43) are configured in the shape of discs.

9. Measuring device according to Claim 8, characterised in that coils (31 to 34) are arranged in each case lying opposite, as mirror images, in the region of the slots, on the end faces of both disc-shaped bodies (41, 43).

**Revendications**

1. Dispositif de mesure pour détecter sans contact un angle de rotation et/ou un couple sur un arbre arrêté ou en rotation, comportant deux corps (18, 19) placés coaxialement sur l'axe, qui peuvent tourner l'un par rapport à l'autre et sont subdivisés sur leurs surfaces tournées l'une vers l'autre en un même nombre de surfaces enveloppes (24) de type segmenté, qui présentent alternativement des conductibilités électriques hautes et basses et auxquels est associé au moins un enroulement (31 - 34), chaque zone de mesure (2w) venant en butée les uns contre les autres, au moins deux enroulements (31 - 34) et les enroulements (31 - 34) d'une zone de mesure (2w) se touchant, de sorte qu'un couplage inductif des enroulements (31 - 34) de cette zone de mesure (2w) se trouve créé, dispositif caractérisé en ce que les enroulements (31 - 34) sont parcourus par un courant alternatif de haute fréquence, en ce que les enroulements (31 - 34) d'une zone de mesure (2w) sont enroulés respectivement à tour de rôle en parallèle les uns à côté des autres, de sorte qu'une spire du premier enroulement (31 - 33) est toujours située contre une spire du deuxième enroulement (32 - 34), de façon que par couplage des enroulements (31 - 34) dans un circuit de pont intégral (pont de Wheatstone) un contrôle de sécurité du dispositif de mesure soit rendu possible.

2. Dispositif de mesure selon la revendication 1, caractérisé en ce que les enroulements (31 - 34) sont réalisés en une couche.

3. Dispositif de mesure selon la revendication 1 et/ou la revendication 2, caractérisé en ce que le premier corps (19) comporte des rainures (26, 27) décalées l'une par rapport à l'autre sur la première moitié de sa longueur ou moitié radiale et sur l'autre moitié de sa longueur ou moitié radiale et en ce que l'autre corps (18) a des rainures (21) s'étendant sur presque toute la face longitudinale ou longueur radiale.

4. Dispositif de mesure selon une des revendications 1 à 3, caractérisé en ce que les enroulements (31 - 34) sont disposés centrés sur chacune des rainures (26, 27) décalées l'une par rapport à l'autre.

5. Dispositif de mesure selon une des revendications 1 à 4, caractérisé en ce que les deux rainures (26, 27) décalées l'une par rapport à l'autre ont une longueur axiale sensiblement moitié de celle de la rainure (21) associée de l'autre corps (18).

6. Dispositif de mesure selon une des revendications 1 à 5, caractérisé en ce que, parmi les deux rainures (26, 27) décalées l'une par rapport à l'autre, la première est disposée dans la zone d'une des deux demi longueurs axiales et l'autre rainure est disposée dans l'autre demi longueur de son corps, de préférence du corps (19) intérieur.

7. Dispositif de mesure selon une des revendications 1 à 6, caractérisé en ce que les corps sont des manchons cylindriques (18, 19) et concentriques l'un par rapport à l'autre et avec l'arbre.

8. Dispositif de mesure selon une des revendications 1 à 6, caractérisé en ce que les corps (41, 43) sont réalisés en forme de disques.

9. Dispositif de mesure selon la revendication 8, caractérisé en ce que sur les faces frontales des deux corps en forme de disques (41, 43) sont disposées respectivement des bobines (31 à 34) symétriquement opposées dans la zone des rainures.

## FIG. 1

## FIG. 2

## FIG.3

FIG. 4

FIG. 5

FIG. 6

FIG. 7

FIG. 8

FIG. 9